# EUROPEAN PATENT SPECIFICATION

(11) **EP 1 986 798 B1**
(45) Date of publication and mention of the grant of the patent: **02.11.2016**
(21) Application number: 07704830.4
(22) Date of filing: 02.02.2007
(51) Int. Cl.: B21C 23/24

(54) **MAKING AN ELONGATED PRODUCT**
HERSTELLUNG EINES LÄNGLICHEN PRODUKTS
FABRICATION D'UN PRODUIT ALLONGÉ

(30) Priority: 03.02.2006 EP 06101240
(43) Date of publication of application: 05.11.2008
(73) Proprietor: Uponor Innovation AB, 73061 Virsbo (SE)
(72) Inventor: JÄRVENKYLÄ, Jyri, FI-15870 Hollola (FI); RIESSELMANN, Franz-Josef, 49393 Lohne (DE); WINTERSTEIN, Ralf, 98617 Meiningen (DE); FREERMANN, Reinhold, 48607 Ochtrup (DE); HOVING, Lars, S-72210 Västerås (SE)
(74) Representative: Papula Oy
(86) International application number: PCT/FI2007/050060
(87) International publication number: WO 2007/088252

(56) References cited:
- EP-A1- 0 494 755
- EP-A1- 0 691 193
- AU-A- 1 628 070
- DE-A1- 2 139 388
- DE-A1- 2 139 388
- FI-B- 112 818
- GB-A- 631 127
- GB-A- 631 127
- US-A1- 2002 007 861
- US-A1- 2002 189 697

## Description

### Background of the invention

The invention relates to a method of manufacturing an elongated product according to the preamble of claim 1, comprising forming a core having an outer surface of plastic, extruding a seamless metal layer on the core allowing a clearance between the metal layer and the core, cooling the metal layer and reducing the diameter of the metal layer to get it in contact with the plastic surface of the core.

The invention further relates to an apparatus according to the preamble of claim 9 for making an elongated product, the apparatus comprising a plastic extruder for extruding a core, a metal extrusion machine for extruding a seamless metal layer outside of the core, the metal layer having an inner diameter larger than the outer diameter of the core so that the metal layer does not contact the core, and reducing means for reducing the diameter of the metal layer to get it in contact with the plastic core.

The invention further relates to an elongated product according to the preamble of claim 13 comprising a core having an outer surface of plastic and a seamless tubular metal layer extruded and drawn down on the core. Exemplary prior art is known from GB631127A.

Multilayer composite pipes which have an inner and an outer layer of plastic and an aluminium layer between the inner and outer layers are well known. Such pipes are made for example such that the inner layer is extruded and coated with tie material. Thereafter, an aluminium band is wrapped around the inner layer and welded such that a longitudinal welding seam is formed. The welded aluminium layer is calibrated and the tie material is activated for bonding the inner layer with the aluminium layer. Thereafter, the aluminium layer is coated with tie material and an outer plastic layer is extruded on the aluminium layer. Such a solution is disclosed for example in EP 0691193. It is also possible to make the pipe such that first the aluminium band is wrapped to form a pipe such that the edges of the aluminium band overlap. Thereafter, the overlapped areas are longitudinally welded with ultrasonic welding. It is also possible to wrap the band such that the edges do not overlap and use butt-welding. Thereafter, the formed aluminium pipe is coated from the inside with tie material and plastic material forming the inner layer, and the outside of the aluminium layer is coated with tie material and plastic that forms the outer layer. In both technologies, it is very difficult to make the welding seam in a reliable way and such that the quality of the welding seam is even. Irregularities in the welding seam could lead to breaks of pipes and the welding seam quite easily breaks during expanding of the pipe end.

DE 2139388 discloses making of a pipe that has an inner layer made of plastic. Seamless metal layer, for example of aluminium, is pressed on the outside of the plastic layer. The aluminium is pressed directly on the plastic core. The temperature of the pressed aluminium is so high that it easily melts and damages the plastic core.

EP 0125788 also discloses extruding a seamless metal layer outside a plastic core. A mandrel is provided with an internal cooling shroud to protect the core from the hot pressed metal. The metal is extruded with an internal diameter greater than the external diameter of the core to permit the intervention of a portion of the cooling shroud and subjected to a stream of cooling air. To eliminate the space between the core and the pressed metal so that the core is tightly clad in a tubular sheath, it is necessary that the extrusion stage be followed by a step in which the metal tube is drawn or swagged down. However, this step work-hardens the cladding, making the product difficult to manipulate. Thus, the hardness of the product increases and the product becomes stiffer.

US 5222284 discloses making a coaxial cable. An elongated core consisting of a conductor coated with an insulator is continuously compacted to reduce the cross-section of the core. A tubular metal cladding is continuously extruded outside of the elongated core and simultaneously the compacted core is continuously fed into the cladding, whereby the compacted core recovers towards its original cross-section to fill the cladding. Thus the core does not touch the metal cladding while the metal is still hot and therefore the damaging of the insulator can be avoided. Further, because the diameter of the metal cladding is not reduced, the hardening of the metal is avoided. However, the outer layer of the core must be made from an insulating material that can be compacted to reduce its cross-section by the application of compressive force. Further, the insulating material must be such that it gradually recovers such that the core tends to return to the original dimensions when the compressive force is relieved. The solution is rather complicated. Further, it is rather difficult to ensure the adhesion between the core and the metal cladding.

### Brief description of the invention

The object of the invention is to provide a new type of method and apparatus for making an elongated product and an elongated product.

The method of the invention is characterized in that the method further comprises annealing the metal layer for increasing its flexibility.

Further, the apparatus of the invention is characterized in that the apparatus further comprises heating means for annealing the metal layer for increasing the flexibility of the metal layer.

Yet further the product of the invention is characterized in that after the metal layer has been drawn down, it has been annealed for increasing its flexibility.

In the invention, an elongated product is formed. First a core is formed, the outer surface of the core being made of plastic. Thereafter, a tubular metal layer is extruded such that the layer is seamless. The inner diameter of the metal layer, when extruded, is larger than the outer diameter of the core such that the metal layer does not contact the core. After the metal has cooled, the diameter of the metal layer is reduced such that the metal layer contacts the plastic core. Thereafter, the metal is annealed such that the flexibility of the metal layer increases. This produces the advantage that the elongated product is not too stiff so that it is easy to manipulate. For example, bending of the pipe is easier and also expanding of the pipe end can be made reliably and easily. All in all, the solution is rather simple and quite easy to control. It is thereby possible to activate an adhesive material between the plastic core and the metal layer simultaneously with the annealing of the metal layer through the annealing temperature.

### Brief description of the figures

The invention will be described in more detail in the attached drawing, wherein:
Figure 1 is a schematic side-view of a pipe manufacturing apparatus, and
Figure 2 is an end-view in cross-section of a multilayer composite pipe.

In the figures, the invention is presented in a simplified manner for the sake of clarity. In the figures, like parts are designated by like reference numerals.

### Detailed description of the invention

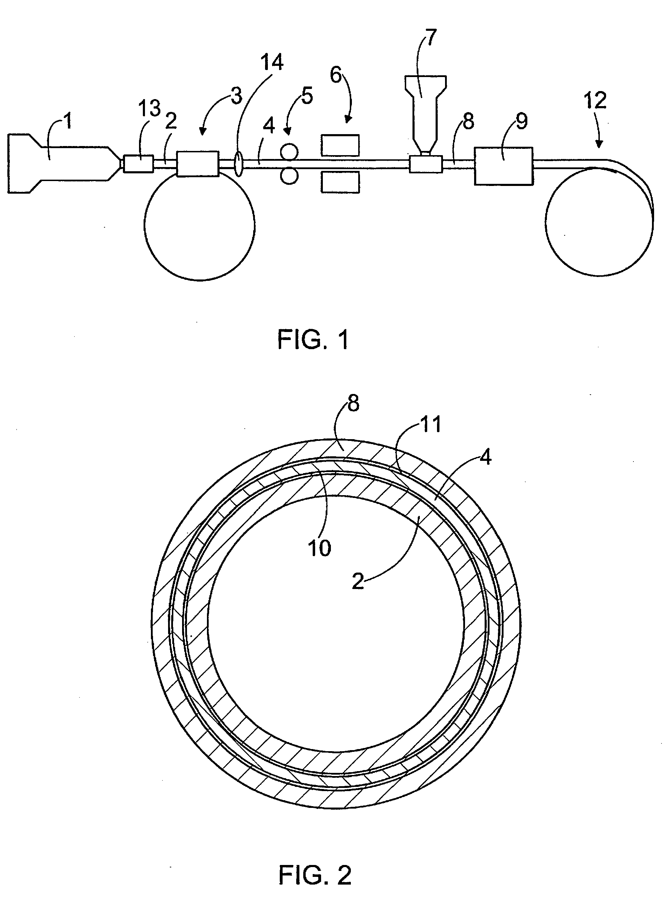

Figure 1 discloses how a multilayer composite pipe having a seamless aluminium layer between plastic layers is formed. Figure 2 shows an example of such a pipe.

First an inner layer 2 of the pipe is extruded with a first plastic extruder 1. The inner layer 2 forms the core of the pipe. There is a calibration/cooling basin 13 after the first plastic extruder. The inner layer 2 is coated with a tie layer. Thus, in the formed pipe there is an inner tie layer 10 between the inner layer 2 and the aluminium laver 4. The inner tie layer 10 and the inner layer 2 can also be co-extruded. An additional tie layer is not needed if the inner layer 2 is made of high molecular weight plastic that itself has good adhesive properties due to grafted functional endgroups, for example.

The inner layer can be extruded, for example, of polyethyl-ene PE, cross-linked polyethylene PEX, polypropylene PP or polybutylene-1 PB, etc. The tie layer may contain, for example, polyethylene PE with maleic anhydride.

The inner layer 2 is fed into the metal extrusion machine 3. The metal extrusion machine 3 comprises a rotatably mounted wheel having an endless circumferencial groove. A shoe is adapted to close part of the groove and mount tooling, which includes an abutment arranged to at least partially block the groove and a passage leading into a die structure. Metal feedstock is inserted into the rotating grooved extrusion wheel. The metal is heated and pressurised by friction. The material engages the abutment in a condition in which it flows through the passage and is extruded through the die structure. The die structure produces a tubular seamless layer of metal and the inner layer 2 is passed through a hollow mandrel in the die structure. A sufficient clearance is allowed between the metal layer and the inner layer to prevent heat damage to the inner layer. The extruded metal can be aluminium such that an aluminium layer 4 is formed. The metal can also be, for example, copper or magnesium or some other metal having rather a low melting point. A suitably low melting point can be achieved, for example, by alloying aluminium with other metals.

After the extrusion, the aluminium layer 4 cools down. At this point, external cooling means can also be used. The cooling means can, for example, be a ring-shaped cooling nozzle 14 that blows cooling air onto the aluminium layer 4. The temperature of the extruded aluminium is about 450°C, which means that the surface of the inner layer 2 would get damaged if the aluminium layer 4 did not cool down before it contacts the surface of the inner layer 2.

After cooling, the aluminium layer 4 is led through forming rolls 5. The number of the forming rolls may be 2, 3 or 4 or more, depending on the structure of the forming rolls. The forming rolls 5 perform a draw down process, which means that the diameter of the aluminium layer 4 is reduced such that the aluminium layer 4 gets in contact with the plastic inner layer 2. Reducing the diameter of the aluminium layer can be performed also, for example, by using conical convergent dies or another suitable method.

Thereafter, the material of the inner tie layer 10, or the material of the inner layer 2 itself if an additional tie layer is not used, is activated such that the inner layer 2 and the aluminium layer 4 adhere together. The material of the inner tie layer 10 is activated by heating it. The material of the tie layer 10 may comprise un-reacted foaming agent. When the material is heated, the foaming agent reacts and the material effectively fills the gap between the inner layer 2 and the aluminium layer 4. Thus, the tolerances between the layers need not be very strict. If the foamed tie material is not closed cell, it forms a leakpath for collected condensates such that a collection of water moisture or some other fluid between the plastic layer and the barrier layer can be eliminated.

Next in the process line is the heating means 6. Preferably, the heating means 6 is an inductive heating means for heating the aluminium layer 4. The aluminium layer 4 is heated by the heating means 6 to the annealing temperature. The annealing temperature may be, for example, higher than 300° C.

Because the annealing must not damage the material of the inner layer 2, its temperature resistance must be adequate. Preferable examples of the material are cross-linked polyethylene PEX, poly(tetrafluoroethylene) PTFE, fluoroethylene propylene FEP, perfluoro alkoxyl alkane PFA, ethylene tetrafluoroethylene co-polymer ETFE, ethylenechlortrifluorethylen E-CTFE, poly(vinylidenefluoride) PVDF and poly(vinyl fluoride) PVF.

The temperature resistance of the tie material must also be adequate. A sufficient temperature resistance can be achieved, for example, by forming the tie material from a material that has rather a high molecular weight and adhesive properties formed by grafting functional end groups to the base material. The temperature resistance of the tie material may also be improved by adding suitable additive or additives to the tie material. A fireprotecting agent used in connection with plastic pipes is a suitable additive. Examples of such additives are short-cut fibre glass, ceramic whiskers fibres, aluminium trihydrate ATH, ermiculite, silicate, phosphate, carbon and carbonaceous agents.

If the tie material has a good temperature resistance, it also simultaneously protects the material of the inner layer. The tie material may also comprise a foaming agent, such as azodicarbonamide, which reacts when the aluminium layer 4 is annealed. Thus, the foamed tie material forms an insulating layer which thermally protects the inner layer 2.

Annealing the aluminium layer 4 gives the pipe a higher flexibility. The stiffness of the pipe can be controlled by selecting how high the annealing temperature is and how long the annealing time is. For example, if the pipe is used in mounting inside the structures, such as in floor heating, whereby high flexibility is needed, the annealing temperature is higher and/or the annealing time is longer. Correspondingly, if surface mounting is used, such as in renovation, whereby stiffer pipes are needed, the annealing temperature is lower and/or the annealing time is shorter. The annealing of the aluminium layer 4 and activating of the material in the inner tie material 10 can be combined such that both steps are made by the heating means 6.

After the heating means 6, the outer surface of the aluminium layer 4 is coated with the tie layer such that an outer tie layer 11 is formed. Thereafter, the outer layer of plastic is formed. It is possible to co-extrude the material of the outer tie layer 11 and the plastic material forming the outer layer 8 together with the second plastic extruder 7. The material of the outer tie layer 11 can be the same as the material for the inner tie layer 10. Also the material for the plastic outer layer 8 may be selected from the same materials as the materials for the plastic inner layer 2.

The diameter of the pipe is typically in the range from 2 to 2000 mm. The wall thicknesses vary accordingly. Typically the amount of the adhesive material is kept as low as possible. If the outer diameter of the pipe is 17 mm, in one example the thickness of the inner layer 2 and the thickness of the outer layer 8 are typically close to 1 mm, the barrier layer 4 of aluminium is about 0,3 mm and the thickness of the adhesive material is about 50 micrometers.

After the extrusion of the outer layer 8, the pipe is cooled by the cooling means 9. After cooling, the pipe is wound on a drum 12.

In some cases, the features disclosed in this description can be used as such regardless of the other features. On the other hand, the features disclosed in this description can be combined for forming various combinations.

If the core is made of a material having a memory effect, such as cross-linked polyethylene PEX, there can be reducing means for reducing the outer diameter of the core before it passes to the metal extrusion machine 3. In such a case, the diameter of the metal layer does not have to be reduced very much, which reduces the hardening of the metal. The core expands to the original diameter when, for example, the core is heated by the heating means 6.

The core need not be extruded simultaneously on-line with the extrusion of the metal layer. The core can be made beforehand in a separate process. The core can be made even in a separate factory and transported to the factory where the metal extrusion machine is. The beforehand made core can be fed to the metal extrusion machine 3 after transportation and/or storage.

For a man skilled in the art, it is obvious that in the course of technical progress, the basic idea of the invention can be carried out in numerous ways. Thus, the invention and its embodiments are not limited by the previous examples but they may vary within the scope of the appended claims. Thus, the elongated product formed with the method and apparatus described above can also be - instead of the pipe as described above - for example a cable.

## Claims

1. A method of manufacturing an elongated product, comprising
forming a core having an outer layer of plastic,
extruding a seamless metal layer on the core allowing a clearance between the metal layer and the core,
cooling the metal layer and
reducing the diameter of the metal layer to get it in contact with the plastic core, **characterized in that** the method further comprises
annealing the metal layer for increasing its flexibility and that
there is tie material between the core and the metal layer and the tie material is activated simultaneously with the annealing.

2. The method of claim 1, **characterized in that**
the core is hollow such that a pipe is formed.

3. The method of any one of the preceding claims, **characterized in that**
the outer diameter of the core is reduced before the seamless metal layer is extruded on the core.

4. The method of claim 3, **characterized in that** the outer diameter of the core is expanded to its original diameter by heating the core.

5. The method of any one of the preceding claims, **characterized in that**
the stiffness of the product is controlled by controlling the annealing temperature and/or the annealing time.

6. The method of any one of the preceding claims, **characterized in that**
there is a tie layer (10) between the core and the metal layer and the material of the tie layer (10) comprises foaming agent, such that the material of the tie layer (10) is foamed to fill the gap between the core and the metal layer.

7. The method of any one of the preceding claims, **characterized in that**
the inner core and a tie layer (10) outside of the inner core are co-extruded.

8. The method of any one of the preceding claims, **characterized in that**
an outer tie layer (11) and an outer layer (8) of plastic are co-extruded outside of the metal layer (4).

9. An apparatus for making an elongated product, the apparatus comprising
a plastic extruder (1) for extruding a core,
metal extrusion machine (3) for extruding a seamless metal layer outside of the core, the metal layer having an inner diameter larger than the outer diameter of the core so that the metal layer does not contact the core and
reducing means for reducing the diameter of the metal layer to get it in contact with the plastic core, **characterized in that**
the apparatus further comprises
heating means (6) for annealing the metal layer for increasing the flexibility of the metal layer and that
the heating means (6) are configured to activate a tie material between the core and the metal layer simultaneously with the annealing of the metal layer.

10. The apparatus of claim 9, **characterized in that**
the plastic extruder (1) is configured to co-extrude the core and a tie layer (10) outside of the core.

11. The apparatus of any one of the claims 9 to 10, **characterized in that**
the apparatus further comprises
a second plastic extruder (7) configured to co-extrude a tie layer (11) and an outer plastic layer (8) outside of the metal layer.

12. The apparatus of any one of the claims 9 to 11, **characterized in that**
the apparatus further comprises
reducing means for reducing the outer diameter of the core before the core is passed to the metal extrusion machine (3).

13. An elongated product comprising
a core having an outer surface of plastic and a seamless tubular metal layer (4) extruded and drawn down on the core, **characterized in that**
there is a tie layer (10) between the core and the metal layer (4) and that
after the metal layer has been drawn down it has been annealed for increasing its flexibility and the material of the tie layer (10) is activated by the heat of the annealing.

14. The product of claim 13, **characterized in that**
the core is hollow such that the product is a pipe.

15. The product of claims 13 or 14, **characterized in that**
the product comprises
a plastic inner layer (2),
the metal layer,
an outer plastic layer (8),
an inner tie layer (10) between the inner layer (2) and the metal layer and
an outer tie layer (11) between the metal layer and the outer plastic layer (8).

16. The product of any one of the claims 13 to 15, **characterized in that**
the product comprises a foamed tie layer (10) between the core and the metal layer.

17. The product of any one of the claims 13 to 16, **characterized in that**
the core is made of cross-linked polyethylene (PEX).

18. The product of any one of the claims 13 to 17, **characterized in that**
the outer diameter of the core is reduced before the seamless metal layer is extruded on the core.

19. The products of any one of the claims 13 to 18, **character- ized** in that
the product comprises a tie layer (10) between the core and the metal layer and the material of the tie layer (10) is formed such that it thermally protects the core.

## Patentansprüche

1. Verfahren zur Herstellung eines länglichen Produktes, umfassend:
Bilden eines Kerns mit einer Außenschicht aus Kunststoff,
Extrudieren einer nahtlosen Metallschicht an dem Kern um einen Leerraum zwischen der Metallschicht und dem Kern zu erlauben,
Kühlen der Metallschicht und
Verringern des Durchmessers der Metallschicht um sie in Kontakt mit dem Kunststoffkern zu bringen, **dadurch gekennzeichnet, dass** das Verfahren ferner umfasst:
Glühen der Metallschicht um deren Flexibilität zu erhöhen und dass sich zwischen dem Kern und der Metallschicht Bindematerial befindet und das Bindematerial gleichzeitig mit dem Glühen aktiviert wird.

2. Verfahren nach Anspruch 1, **dadurch gekennzeichnet, dass** der Kern hohl ist, so dass ein Rohr gebildet wird.

3. Verfahren nach einem der vorstehenden Ansprüche, **dadurch gekennzeichnet, dass** der Außendurchmesser des Kerns sich verringert bevor die nahtlose Metallschicht an dem Kern extrudiert wird.

4. Verfahren nach Anspruch 3, **dadurch gekennzeichnet, dass** der Außendurchmesser des Kerns sich durch Erhitzen zu seinem Ursprungsdurchmesser ausweitet.

5. Verfahren nach einem der vorstehenden Ansprüche; **dadurch gekennzeichnet, dass** die Steifigkeit des Produkts gesteuert wird durch Steuern der Glühtemperatur und/oder der Glühzeit.

6. Verfahren nach einem der vorstehenden Ansprüche, **dadurch gekennzeichnet, dass** sich zwischen dem Kern und der Metallschicht eine Bindeschicht (10) befindet, und das Material der Bindeschicht (10) einen Schäumer aufweist, derart, dass das Material der Bindeschicht (10) aufgeschäumt wird um den Spalt zwischen dem Kern und der Metallschicht zu füllen.

7. Verfahren nach einem der vorstehenden Ansprüche, **dadurch gekennzeichnet, dass** der innere Kern und eine Bindeschicht (10) außerhalb des inneren Kerns coextrudiert werden.

8. Verfahren nach einem der vorstehenden Ansprüche, **dadurch gekennzeichnet, dass** eine äußere Bindeschicht (11) und eine äußere Schicht (8) aus Kunststoff außerhalb der Metallschicht (4) coextrudiert werden.

9. Vorrichtung zum Herstellen eines länglichen Produkts, die Vorrichtung aufweisend:
einen Kunststoffextruder (1) zum Extrudieren eines Kerns,
eine Metallextrusionsmaschine (3) zum Extrudieren einer nahtlosen Metallschicht außerhalb des Kerns, die Metallschicht besitzend einen Innendurchmesser, der größer ist als der Außendurchmesser des Kerns, so dass die Metallschicht nicht in Kontakt mit dem Kern kommt, und
Reduziermittel zum Verringern des Durchmessers der Metallschicht um diese in Kontakt mit dem Kunststoffkern zu bringen, **dadurch gekennzeichnet, dass**
die Vorrichtung ferner aufweist
Mittel zum Erwärmen (6) zum Glühen der Metallschicht zum Erhöhen der Flexibilität der Metallschicht und dass
die Mittel zum Erwärmen (6) ausgestaltet sind, ein Bindematerial zwischen dem Kern und der Metallschicht gleichzeitig mit dem Glühen der Metallschicht zu aktivieren.

10. Vorrichtung nach Anspruch 9, **dadurch gekennzeichnet, dass** der Kunststoffextruder (1) ausgestaltet ist, den Kern und eine Bindeschicht (10) außerhalb des Kerns zu co-extrudieren.

11. Vorrichtung nach einem der Ansprüche 9 bis 10, **dadurch gekennzeichnet, dass** die Vorrichtung ferner aufweist:
einen zweiten Kunststoffextruder (7), der ausgestaltet ist, eine Bindeschicht (11) und eine äußere Plastikschicht (8) außerhalb der Metallschicht zu extrudieren.

12. Vorrichtung nach einem der Ansprüche 9 bis 11, **dadurch gekennzeichnet, dass** die Vorrichtung ferner aufweist: Mittel zum Reduzieren des Außendurchmessers des Kerns, bevor der Kern zu der Metallextrusionsmaschine (3) gelangt.

13. Längliches Produkt, aufweisend:
einen Kern mit einer Außenoberfläche aus Kunststoff und eine nahtlose, röhrenartige Metallschicht (4) die an dem Kern extrudiert und nach unten gezogen wird, **dadurch gekennzeichnet, dass**
es zwischen dem Kern und der Metallschicht (4) eine Bindeschicht (10) gibt, und dass nachdem die Metallschicht nach unten gezogen wurde, zum Erhöhen ihrer Flexibilität geglüht wurde und das Material der Bindeschicht (10) durch die Wärme des Glühens aktiviert wird.

14. Produkt nach Anspruch 13, **dadurch gekennzeichnet, dass**
der Kern hohl ist, so dass das Produkt ein Rohr ist.

15. Produkt nach Anspruch 13 oder 14, **dadurch gekennzeichnet, dass**
das Produkt aufweist:
Eine innere Kunststoffschicht (2),
die Metallschicht
eine äußere Kunststoffschicht (8),
eine innere Bindeschicht (10), zwischen der inneren Schicht (2) und der Metallschicht und
eine äußere Bindeschicht (11) zwischen der Metallschicht und der äußeren Kunststoffschicht (8).

16. Produkt nach einem der Ansprüche 13 bis 15, **dadurch gekennzeichnet, dass** das Produkt zwischen dem Kern und der Metallschicht eine geschäumte Bindeschicht (10) aufweist.

17. Produkt nach einem der Ansprüche 13 bis 16, **dadurch gekennzeichnet, dass**
der Kern aus vernetztem Polyethylen (PEX) gefertigt ist.

18. Produkt nach einem der Ansprüche 13 bis 17, **dadurch gekennzeichnet, dass**
der Außendurchmesser des Kerns verringert wird, bevor die nahtlose Metallschicht an dem Kern extrudiert wird.

19. Produkte nach einem der Ansprüche 13 bis 18, **dadurch gekennzeichnet, dass**
das Produkt eine Bindeschicht (10) zwischen dem Kern und der Metallschicht aufweist, und das Material der Bindeschicht (10) derart gebildet ist, dass es den Kern thermisch schützt.

## Revendications

1. Méthode de fabrication d'un produit de forme allongée, comprenant le formage d'un noyau ayant une couche extérieure en plastique,
l'extrusion d'une couche métallique sans joint sur le noyau laissant un espace entre la couche métallique et le noyau,
le refroidissement de la couche métallique et
la réduction du diamètre de la couche métallique afin de la mettre en contact avec le noyau de plastique, **caractérisée par le fait que** la méthode comprend également
le recuit de la couche métallique pour augmenter sa flexibilité et la présence d'un matériau de liaison entre le noyau et la couche métallique, le matériau de liaison étant activé simultanément au recuit.

2. Méthode selon la revendication 1, **caractérisée par le fait que**
le noyau est creux de façon à former un tube.

3. Méthode selon l'une quelconque des revendications précédentes, **caractérisée par le fait que**
le diamètre extérieur du noyau est réduit avant que la couche métallique sans joint ne soit extrudée sur le noyau.

4. Méthode selon la revendication 3, **caractérisée par le fait que**
le diamètre extérieur du noyau est augmenté par rapport à son diamètre original, en le chauffant.

5. Méthode selon l'une quelconque des revendications précédentes, **caractérisée par le fait que**
la rigidité du produit est contrôlée en contrôlant la température de recuit et/ou la durée du recuit.

6. Méthode selon l'une quelconque des revendications précédentes, **caractérisée par le fait**
**qu'**il existe une couche de liaison (10) entre le noyau et la couche métallique et que le matériau de la couche de liaison (10) comprend un agent gonflant, de sorte que le matériau de la couche de liaison (10) se gonfle pour remplir l'espace entre le noyau et la couche métallique.

7. Méthode selon l'une quelconque des revendications précédentes, **caractérisée par le fait que**
le noyau intérieur et une couche de liaison (10) située à l'extérieur du noyau intérieur sont coextrudés.

8. Méthode selon l'une quelconque des revendications précédentes, **caractérisée par le fait qu'**
une couche de liaison extérieure (11) et une couche extérieure (8) de plastique sont coextrudées sur l'extérieur de la couche métallique (4).

9. Appareil pour fabriquer un produit de forme allongée, ledit appareil comprenant
une extrudeuse de matière plastique (1) pour extruder un noyau,
une machine à extruder le métal (3) pour extruder la couche métallique sans joint à l'extérieur du noyau, la couche métallique ayant un diamètre intérieur supérieur au diamètre extérieur du noyau, de sorte que la couche métallique ne soit pas en contact avec le noyau et
un moyen de réduction pour réduire le diamètre de la couche métallique afin qu'elle vienne en contact avec le noyau en plastique, **caractérisé par le fait que**
l'appareil comprend également
un moyen de chauffage (6) pour recuire la couche métallique afin d'augmenter sa flexibilité et
le moyen de chauffage (6) est configuré pour activer le matériau de liaison placé entre le noyau et la couche métallique, simultanément au recuit de la couche métallique.

10. Appareil selon la revendication 9, **caractérisé par le fait que**
l'extrudeuse de matière plastique (1) est configurée pour co-extruder le noyau et la couche de liaison (10) située à l'extérieur du noyau.

11. Appareil selon l'une quelconque des revendications 9 à 10, **caractérisé par le fait que**
l'appareil comprend également
une deuxième extrudeuse de matière plastique (7) configurée pour co-extruder la couche de liaison (11) et la couche de plastique extérieure (8) à l'extérieur de la couche métallique.

12. Appareil selon l'une quelconque des revendications 9 à 11, **caractérisé par le fait que**
l'appareil comprend également
un moyen de réduction pour réduire le diamètre extérieur du noyau avant que le noyau ne soit passé dans la machine à extruder le métal (3).

13. Produit de forme allongée comprenant
un noyau ayant une surface extérieure en plastique et une couche métallique tubulaire sans joint (4) extrudée et abaissée au contact du noyau, **caractérisé par le fait qu'**
il y a une couche de liaison (10) entre le noyau et la couche métallique (4) et qu' après que la couche métallique ait été abaissée elle a été recuite afin d'augmenter sa flexibilité et le matériau de la couche de liaison (10) est activé par la chaleur du recuit.

14. Produit selon la revendication 13, **caractérisé par le fait que**
le noyau est creux de sorte que le produit est un tube.

15. Produit selon les revendications 13 ou 14, **caractérisé par le fait que** le produit comprend
une couche intérieure en plastique (2)
la couche métallique,
une couche de plastique extérieure (8)
une couche de liaison intérieure (10) placée entre la couche intérieure (2) et la couche métallique et
une couche de liaison extérieure (11) placée entre la couche métallique et la couche de plastique extérieure (8).

16. Produit selon l'une quelconque des revendications 13 à 15, **caractérisé par le fait que**
Le produit comprend une couche de liaison gonflée (10) placée entre le noyau et la couche métallique.

17. Produit selon l'une quelconque des revendications 13 à 16, **caractérisé par le fait que**
le noyau est en polyéthylène réticulé (XLPE).

18. Produit selon l'une quelconque des revendications 13 à 17, **caractérisé par le fait que**
le diamètre extérieur du noyau est réduit avant que la couche métallique sans joint ne soit extrudée sur le noyau.

19. Produits selon l'une quelconque des revendications 13 à 18, **caractérisés par le fait que**
le produit comprend une couche de liaison (10) placée entre le noyau et la couche métallique et que le matériau de la couche de liaison (10) est formé de façon à protéger thermiquement le noyau.
